# EUROPEAN PATENT APPLICATION

(11) **EP 2 618 258 A2**
(43) Date of publication of application: **24.07.2013**
(21) Application number: 13151776.5
(22) Date of filing: 18.01.2013
(51) Int. Cl.: G06F 9/54, G06F 21/53, H04N 21/414, H04L 29/06

(54) **Media rendering system**

(30) Priority: 19.01.2012 US 201261588298 P
(71) Applicant: Cinemo GmbH, 76133 Karlsruhe (DE)
(72) Inventor: Lesser, Richard, 76227 Karlsruhe (DE)
(74) Representative: Zinkler, Franz

(57) **Abstract**

A media rendering system comprises: a head device and a plurality of client devices connected to the head device, wherein the head device is remotely located from the client devices and is an external device with respect to the client devices, wherein at least one client device comprises a stored media item not accessible by an application program running on the at least client device, wherein the client device is configured to allow an access to the stored media item from an external device, wherein the head device is configured to instruct the at least one client device to access to the stored media item in the at least one client device, wherein the at least one client device is configured to retrieve the stored media item and to transmit the retrieved stored media item to the head device, wherein the head device is configured to receive the media item transmitted from the at least one client device and to transmit the received media item to the plurality of client devices, and wherein the plurality of client devices are configured for rendering the media item transmitted from the head device.

## Description

### Field of the Invention

The present invention relates to media rendering systems which can be used, for example, in a vehicle or other locations.

### Background of the Invention

Some portable devices like tablet computers such as the iPad (Registered Trademark) or iPhone (Registered Trademark) do not allow third party applications running on these mobile devices to access the content on such devices.

Exemplarily, Apple devices such as the iPad or the iPhone require that such a content has to be transferred from the mobile device to the personal computer using the corresponding program iTunes. Subsequently, one must again use iTunes to retransfer the content out of iTunes to the third party application running on the portable device. Typically, this application program is running in a so-called sandbox environment on the mobile device, which means that the application program running within the sandbox environment cannot access the media item storage of the mobile device, and therefore one has to transfer the content out of iTunes into the sandbox environment, in which the application program is running. A sandbox, as known in the art of computing, is a virtual container, in which noncertified programs or untrusted programs can be safely run. Furthermore, within the context of software development, a sandbox is an online environment in which code or content changes can be tested without affecting the original system.

It becomes clear that this is a complicated procedure, which requires a time-consuming action by the user and also has the disadvantage of having the content twice on the same device subsequent to the back and forth procedure described before.

### Summary of the Invention

It is an object of the present invention to provide an improved concept for media rendering.

In accordance with a first aspect of the present invention, this object is achieved by a media rendering system comprising: a head device and a plurality of client devices connected to the head device, wherein the head device is remotely located from the client devices and is an external device with respect to the client devices, wherein at least one client device comprises a stored media item not accessible by an application program running on the at least client device, wherein the client device is configured to allow an access to the stored media item from an external device, wherein the head device is configured to instruct the at least one client device to access to the stored media item in the at least one client device, wherein the at least one client device is configured to retrieve the stored media item and to transmit the retrieved stored media item to the head device, wherein the head device is configured to receive the media item transmitted from the at least one client device and to transmit the received media item to the plurality of client devices, and wherein the plurality of client devices are configured for rendering the media item transmitted from the head device.

In accordance with a further aspect of the present invention, this object is achieved by a method of rendering media content within a media rendering system comprising a head device and the plurality of client devices connected to the head device, wherein the head device is remotely located from the client device and is an external device with respect to the client devices, wherein at least one client device comprises a stored media item not accessible by an application program running on the client device, comprising: allowing, by the client device, an access to the stored media item from an external device; instructing, by the head device, the at least one client device to access the stored media item in the at least one client device; retrieving, by the at least one client device, the stored media item and transmitting the retrieved stored media item to the head device; receiving, by the head device, the media item transmitted from the at least one client device and transmitting the received media item to the plurality of client devices; and rendering, by the plurality of client devices, the media item transmitted from the head device.

In accordance with a further aspect of the present invention, this object is achieved by a non-transitory storage medium having stored thereon a computer program for performing, when running on a computer or a processor, the method described before.

The present invention provides a way for third party applications running on such devices having sandbox environments to access the content without the disadvantages above. In particular, it is achieved to render the content by a client device due to the fact that media item storages in mobile devices having sandbox environments for third party programs nevertheless are accessible via external terminals or external connectors such as an infotainment system in a car or a docking station. This external connection is utilized by the inventive media rendering system in order to retrieve a media item from a client device via an external head device and to transmit this retrieved media item to the head device. Then, the head device transmits this media item to other client devices and additionally retransmits this media item to the client device, from which the media item originates, but into the sandbox environment of the application program. Then, all client devices can render the media item, and this rendering is preferably performed in a synchronous way as preferred by an infotainment system within a vehicle or at any other location such as at home, etc.

### Brief Description of the Drawings

Subsequently, preferred embodiments of the present invention are discussed in the context of the accompanying drawings, in which:
- Fig. 1: is a block diagram of an embodiment of the present invention;
- Fig. 2: is a flowchart of a preferred way of cooperation between the head device and the client devices; and
- Fig. 3: is a schematic top-down view of a vehicle provided with the media rendering system comprising a head device and a plurality of client devices.

### Detailed Description of the Preferred Embodiments

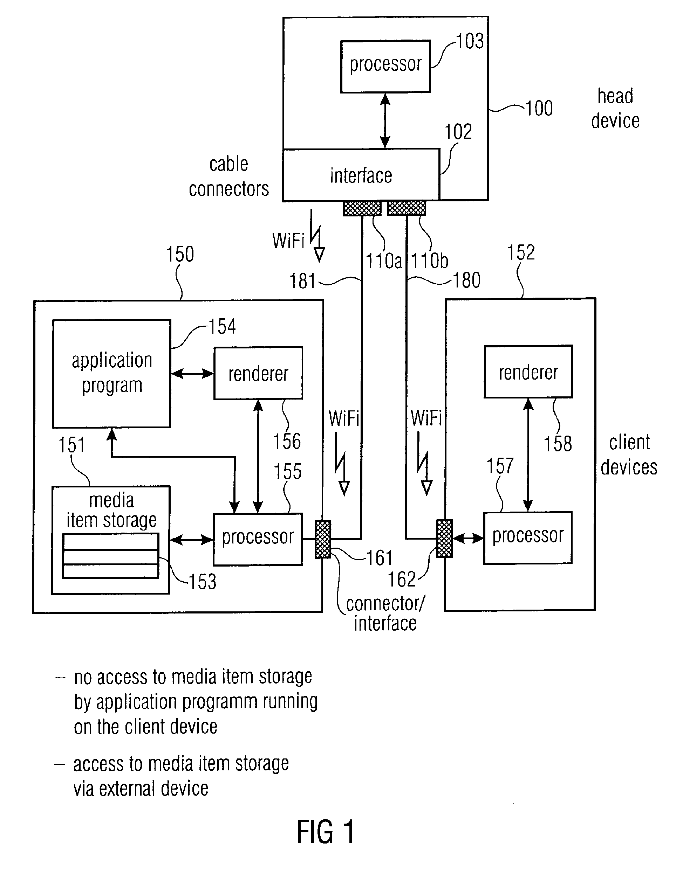

Fig. 1 illustrates a block diagram of a media rendering system comprising a head device 100 and a plurality of client devices 150, 152. The head device 100 and the client devices 150, 152 are connected to each other. Preferably, there is a two-fold connection. One connection is a wired connection using cables 180, 181, which are located between the head device 100 and the client device 152, and with respect to cable 181 between the head device 100 and the client device 150. Preferably, these cables are connected to cable connectors 110 at the head device and to connectors 161 and 162 at the client devices.

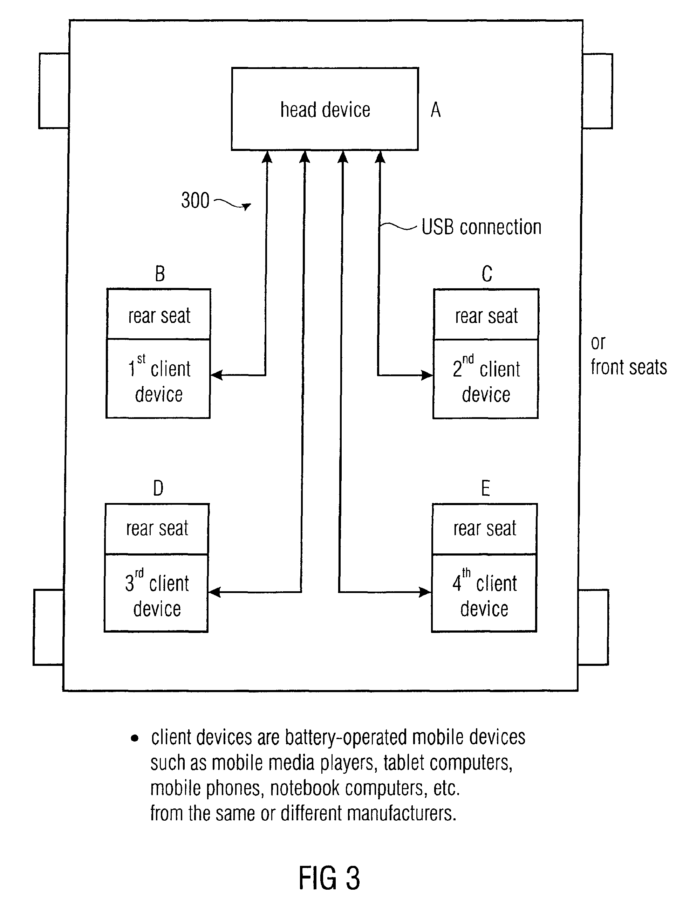

As can be seen from Fig. 1, the head device is remotely located from the client device and is an external device with respect to the client devices. Stated differently, the head device and the client devices are not integrated within a single case, but are remotely located from each other. Exemplarily, the client devices can be fixed through rear or front seats of a car as illustrated in Fig. 3, and the head device can be placed anywhere within the car, such as between the two front seats within a vehicle entertainment controller that can additionally have navigation system functionalities, broadcasting receive functionalities, free speaking functionalities for mobile phones, a DVD/Blu-ray player and so on. Alternatively the head device can be a separate device located anywhere at a suitable place within the vehicle, such as in a box between the two front seats or within a closable box typically located in front of the front seat near the driver seat.

As illustrated in Fig. 1, at least one client device such as the client device 150 comprises a media item storage 151 having stored media items 153 that are not accessible by an application program 154 running on the client device. Particularly, the media item storage 151 having stored media items 153 cannot be directly accessed by the application program. "Direct" means that there is no access connection between the application program 154 and the storage 151 as illustrated in Fig. 1. Naturally, the application program can eventually access the inventive procedure, i.e., via the external connector 161. Preferably, the application program 154 is running on the client device within a sandbox environment. Typically, the at least one client device 150 may further comprise a processor 155 and a renderer 156. Additionally, an interface is located at the connector 161 for interfacing the connector 162 and the processor.

The other client device 152 may have the same structure as the at least one client device 150, but can also be structured differently. Typically, the other client device may comprise a processor 157 and a renderer 158 and interface circuits between the connector 162 at the processor 157.

Each of the client devices is preferably battery-operated and preferably a mobile device such as a mobile media player, a tablet computer, a mobile phone, a notebook (laptop) computer, etc. Additionally, the client device can be from the same manufacturer such as Apple or from different manufacturers such as Apple on the one hand and Samsung on the other hand. In view of this, it becomes clear that the present invention allows having a media rendering system consisting of mobile devices of different kinds and manufacturers, such as comprising of tablet computers such as the iPad on the one hand and the Samsung Galaxy on the other hand and consisting of mobile phones such as the iPhone or mobile phones from other manufactures, etc.

Preferably, the head device is not only connected to the client devices via the wired connection but also via a wireless connection such as any known wireless connection as WiFi, a wireless LAN connection, a Bluetooth connection or any other wireless connection protocol.

To this end, the head device not only has the wired interface 102, but also a wireless interface cooperating with a processor 103 of the head device. The head device can have additional components such as a renderer, provided that the head device is also configured for rendering the media item retrieved from the media item storage 151 of the client device 150. As can be seen from Fig. 1, the client device 150 is configured so that an access to the stored media item 153 is allowed from an external device via the connector 161. Hence, although a connection between the application program 154 and the media item storage 151 is not provided due to the sandbox environment implementation of the client device, an external device can nevertheless access the media item storage 151 via the connector 161, and this access can be a direct access or an access by a processor connected between the storage and the interface depending on the particular implementation.

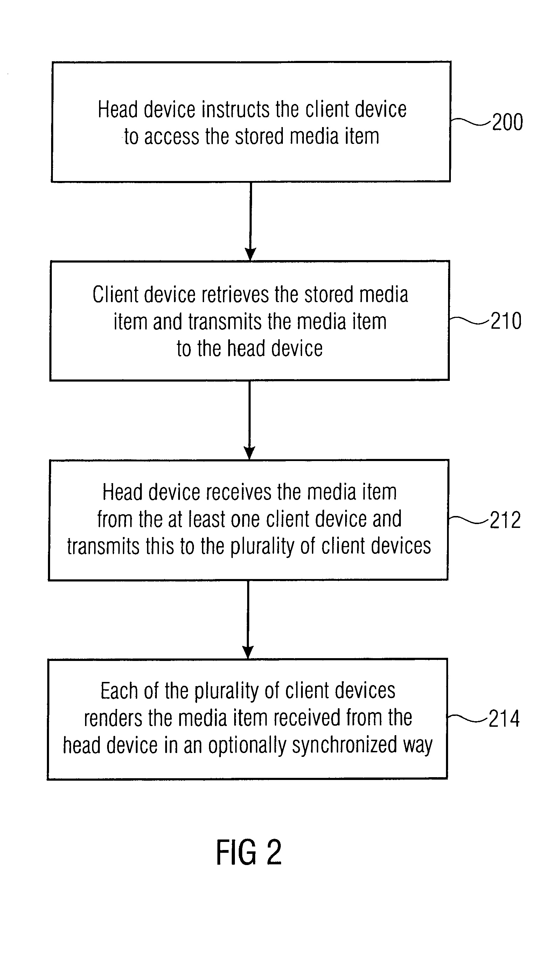

Hence, the present invention makes use of the fact that mobile devices such as iPhone or iPad allow the user to access its content from an external device, like an infotainment system in a vehicle or like a docking station. In the present invention, this external device is the head device 100 as will be described with respect to Fig. 2.

As illustrated at 200, the head device is configured to instruct the at least one client device 150 to access to the stored media item 153 in the at least one client device 150. Hence, the head device 100 has received, for example, by a preceding operation, the media content summary of the media item storage 151 of the client device 150 and/or 152 and the user has then selected a certain media item in the media item storage 151 of the at least one client device for rendering/reproduction. When the media item is an audio track, then the rendering is an audio rendering, and when the media item is a video track, then the rendering is a video rendering, and when the media item is only a picture, then the rendering is a picture rendering. Depending on the implementation, the renderers 156, 158 of the client devices and an optional renderer of the head device are in the position to render any such items. Naturally, the present invention is not limited to only two client devices, but the head device can control an arbitrarily selected number of client devices constructed like client device 150.

As illustrated at 210, the at least one client device is configured to retrieve the stored media item 153 from the media item storage 151 preferably via the processor 155 of Fig. 1 and then the retrieved media item is transmitted to the head device via the wired connection 181. Depending on the implementation, however, this transmission can also be a wireless transmission, but it is preferred to use a wired connection for this procedure typically using a USB cable attached to USB connectors, since such serial data transmission functionalities are available at almost any mobile device currently available and due to the fact that the USB connectors and cables have the functionality to not only transmit data but to also transmit power from the head device to the client devices. Typically, the client devices are battery operated mobile devices and therefore connecting the client devices to the head device via USB cables advantageously results in a battery charging of the client devices.

As outlined at 212, the head device receives the media item 153 from the at least one client device and transmits this media item back to all client devices 150, 152 of the plurality of client devices.

Then, each of the plurality of client devices renders the media item received from the head device, where this rendering is preferably performed in a synchronized way, i.e. that all client devices located within the car render a media content such as a movie in a synchronized way, i.e. concurrently, so that the viewers of different client devices are not disturbed by other client devices' sound. However, when the users wear headphones, then the disturbance is not so significant and therefore an unsynchronized way of distribution is also sufficient.

As outlined before, the at least one client device 150 in Fig. 1 is preferably configured to have a sandbox environment for the application programs so that the application program can not access the stored media item outside the sandbox environment.

Furthermore, the head device is connected to the plurality of client devices in a preferred embodiment by a wired connection, wherein the wire of the wired connection is fixed to the connector at a case of the at least one client device.

In a further implementation, the plurality of client devices are battery-operated, and the wired connection is configured to transmit data from and to the head device and to charge the plurality of client devices.

In an embodiment, the wired connection is a USB (USB = Universal Serial Bus) connection. In a preferred embodiment, an additional wireless connection using a wireless communication protocol is provided between the head device and the plurality of client devices, where the head device and the at least one client device are configured to use the wired connection for getting the stored media item from the at least one client device to the head device and to use the wireless connection in getting the media item from the head device to the plurality of client devices.

One protocol for the transmission over the wireless connection is the WiFi protocol for synchronized rendering by the plurality of client devices.

Furthermore, the at least one client device comprises an application specific interface provided by the manufacturer of the client device or comprises open source libraries in order to access the stored media item in response to an instruction received via an interface to an external device from the head device.

Furthermore, in one embodiment the head device is configured to encrypt the received media item and to transmit the received media item to the plurality of client devices in an encrypted form. Furthermore, the head device is then configured to transmit the encrypted media item to the plurality of client devices, wherein each of the client devices is configured to decrypt the encrypted media item and to render the decrypted media item.

Subsequently, a further embodiment of the present invention is discussed. In a car, one or more devices like an iPad, iPhone (for example, illustrated at B and C in Fig. 3) are connected to the head device illustrated at A in Fig. 3. This connection is performed via a USB cable as outlined at 300. The head device then accesses the content of one or all of the devices through the connected USB interface 300. In the case of Apple devices such as iPad or iPhone, this is done through application programming interfaces (API) provided by Apple or open source libraries like libipod. Then a software on the head device A in Fig. 3 will serve the content from the iPad, iPhone, either in the raw format such as PCM for audio or real-time compressed such as MP3 for audio, back to the same, i.e. the originating device and additional other devices like, for example, a Samsung Galaxy Tablet (which can be any of the client devices such as client device E in Fig. 3) over a network interface like WiFi using protocols like e.g. Cinemo-Distributed Playback or DLNA (DLNA = Digital Living Network Alliance). The digital living network alliance is, for example, engaged in developing and further improving home network device interoperability guidelines for designers and manufacturers of for example mobile devices. A network encryption such as the DTCP/IP (digital transmission content protection over IP) can be performed or not. As illustrated in Fig. 3, the devices can be mounted at the front or rear seats in a vehicle like a rear-seat-TV. The vehicle's can be cars, busses, aircrafts, etc. Naturally, the inventive media rendering system and method can also be used in the context of other consumer electronics such as at home, etc.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a BD, DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a non-transitory data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. Media rendering system, comprising:
a head device and a plurality of client devices connected to the head device,
wherein the head device is remotely located from the client devices and is an external device with respect to the client devices,
wherein at least one client device comprises a stored media item not accessible by an application program running on the at least client device,
wherein the client device is configured to allow an access to the stored media item from an external device,
wherein the head device is configured to instruct the at least one client device to access to the stored media item in the at least one client device,
wherein the at least one client device is configured to retrieve the stored media item and to transmit the retrieved stored media item to the head device,
wherein the head device is configured to receive the media item transmitted from the at least one client device and to transmit the received media item to the plurality of client devices, and
wherein the plurality of client devices are configured for rendering the media item transmitted from the head device.

2. Media rendering system of claim 1,
wherein the at least one client device is configured to have a sandbox environment for the application program so that the application program cannot access the stored media item outside the sandbox environment.

3. Media rendering system of claim 1 or 2,
wherein the head device is connected to the plurality of client devices by a wired connection, wherein a wire of the wired connection is fixed to a connector at a case of the at least one client device.

4. Media rendering system of any of claims 1 to 3,
wherein the plurality of client devices are battery-operated, and wherein the wired connection is configured to transmit data from and to the head device and to charge the plurality of client devices.

5. Media rendering system of claim 4, wherein the wired connection is a USB (Universal Serial Bus) connection.

6. Media rendering system of any of claims 1 to 5, comprising a wired connection between the head device and the at least one client device, and comprising a wireless connection using a wireless communication protocol between the head device and the plurality of client devices, wherein the head device and the at least one client device are configured to use the wired connection for getting the stored media item from the at least one client device to the head device and to use the wireless connection in getting the media item from the head device to the plurality of client devices.

7. Media rendering system of any of claims 1 to 6,
wherein the head device is configured to transmit the received media item to the plurality of client devices using a protocol for synchronized rendering by the plurality of client devices so that the plurality of client devices perform a synchronized rendering of the stored media item.

8. Media rendering system of any of claims 1 to 7,
wherein the at least one client device comprises an application specific interface provided by the manufacturer of the client device or comprises open source libraries in order to access the stored media item in response to an instruction received via an interface to an external device.

9. Media rendering system of any of claims 1 to 8,
wherein the head device is configured to encrypt the received media item and to transmit the received media item to the plurality of client devices in an encrypted form, and
wherein the head device is configured to transmit the encrypted media item to the plurality of client devices, and wherein each client device of the plurality of client devices is configured to decrypt the encrypted media item and to render the decrypted media item.

10. Method of rendering media items within a media rendering system comprising a head device and the plurality of client devices connected to the head device, wherein the head device is remotely located from the client device and is an external device with respect to the client devices, wherein at least one client device comprises a stored media item not accessible by an application program running on the client device, comprising:
allowing, by the client device, an access to the stored media item from an external device;
instructing, by the head device, the at least one client device to access the stored media item in the at least one client device;
retrieving, by the at least one client device, the stored media item and transmitting the retrieved stored media item to the head device;
receiving, by the head device, the media item transmitted from the at least one client device and transmitting the received media item to the plurality of client devices; and
rendering, by the plurality of client devices, the media item transmitted from the head device.

11. Non-transitory storage medium having stored thereon a computer program for performing, when running on a computer, a method of rendering media items within a media rendering system comprising a head device and the plurality of client devices connected to the head device, wherein the head device is remotely located from the client device and is an external device with respect to the client devices, wherein at least one client device comprises a stored media item not accessible by an application program running on the client device, comprising:
allowing, by the client device, an access to the stored media item from an external device;
instructing, by the head device, the at least one client device to access the stored media item in the at least one client device;
retrieving, by the at least one client device, the stored media item and transmitting the retrieved stored media item to the head device;
receiving, by the head device, the media item transmitted from the at least one client device and transmitting the received media item to the plurality of client devices; and
rendering, by the plurality of client devices, the media item transmitted from the head device.
